# EUROPÄISCHE PATENTANMELDUNG

(11) **EP 2 026 161 A1**
(43) Veröffentlichungstag der Anmeldung: **18.02.2009**
(21) Anmeldenummer: 08104287.1
(22) Anmeldetag: 06.06.2008
(51) Int. Cl.: G05D 1/02

(54) **Ansteuersystem sowie Ansteuerverfahren für ein Roboterfahrzeug**

(30) Priorität: 31.07.2007 DE 102007035823
(71) Anmelder: ROBERT BOSCH GMBH, 70442 Stuttgart (DE)
(72) Erfinder: Biber, Peter, 72070 Tuebingen (DE); Marx, Klaus, 70563 Stuttgart (DE); Koeder, Thilo, 70839 Gerlingen (DE); Koch, Christoph, 70178 Stuttgart (DE); Albert, Amos, 71229 Leonberg (DE)

(57) **Zusammenfassung**

Die Erfindung betrifft ein Ansteuersystem für ein Roboterfahrzeug (2), mit ersten Mitteln (4) zum Erzeugen eines ersten Laserstrahls (L₁) und mindestens mit zweiten Mitteln (6) zum Erzeugen mindestens eines zweiten Laserstrahls (L₂), und mit ersten Schwenkmitteln (17) zum Verschwenken des ersten Laserstrahls (L₁) um eine erste Schwenkachse (5) sowie mindestens mit zweiten Schwenkmitteln (18) zum Verschwenken des zweiten Laserstrahls (L₂) um eine zweite Schwenkachse (7), und mit Schwenkansteuermitteln (8) zum Ansteuern der Schwenkmittel (17, 18), und mit Sensormitteln (15) zum Erfassen der Laserstrahlen (L₁, L₂), und mit Antriebsansteuermitteln (12), die die Antriebsmittel (11) eines zu steuernden Roboterfahrzeuges (2) in Abhängigkeit einer Verschwenkbewegung mindestens eines der Laserstrahlen (L₁, L₂) ansteuern.

Ferner betrifft die Erfindung ein Ansteuerverfahren, sowie ein Roboterfahrzeug, betreibbar mit einem derartigen Ansteuerungsverfahren.

## Beschreibung

### Stand der Technik

Die Erfindung betrifft ein Ansteuersystem für ein Roboterfahrzeug gemäß Anspruch 1 sowie ein Ansteuerverfahren für ein Roboterfahrzeug gemäß Anspruch 14.

Es sind Ansteuersysteme für autonome Rasenmäher bekannt, die einen an der Außengrenze des Arbeitsbereichs (Rasenfläche) vergrabenen, stromdurchflossenen Leiter umfassen. Entsprechende Sensoren an dem Rasenmäher detektieren das Überfahren der Außengrenze und Ansteuermittel veranlassen in der Folge ein Wendemanöver des Rasenmähers. Die bekannten Ansteuersysteme sind aufwendig zu installieren und erlauben lediglich eine Zufallsnavigation.

Ein verbessertes Ansteuersystem für autonome Rasenmäher ist aus der GB 2 277 152 A1 bekannt. Das bekannte Ansteuersystem umfasst eine Vielzahl von voneinander beabstandeten Landmarken, die einen Arbeitsbereich (Rasenfläche) begrenzen. Der autonome Rasenmäher kommuniziert aktiv mit den Landmarken um seine Position zu bestimmen und auf Basis dieser Positionsdaten mit Hilfe einer Logikeinheit eine Fahrtstrecke zu berechnen. Insbesondere bei unregelmäßig konturierten Rasenflächen ist eine Vielzahl von Landmarken notwendig, wodurch die Installation des Ansteuersystems aufwendig ist.

### Offenbarung der Erfindung

### Technisch Aufgabe

Der Erfindung liegt die Aufgabe zugrunde, ein Ansteuersystem sowie ein Ansteuerverfahren für Roboterfahrzeuge vorzuschlagen, das ohne Radartechnik auskommt und möglichst einfach zu installieren ist.

### Technische Lösung

Diese Aufgabe wird hinsichtlich des Ansteuersystems mit den Merkmalen des Anspruchs 1 und hinsichtlich des Ansteuerverfahrens mit den Merkmalen des Anspruchs 14 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Zur Vermeidung von Wiederholungen sollen rein vorrichtungsgemäß offenbarte Merkmale auch als verfahrensgemäß offenbart gelten und beanspruchbar sein. Ebenso sollen rein verfahrungsgemäß offenbarte Merkmale als vorrichtungsgemäß offenbart gelten und beanspruchbar sein.

Erfindung liegt der Gedanke zugrunde, mindestens zwei Laserstrahlen zu erzeugen, die um jeweils eine Schwenkachse mit Hilfe von Schwenkmitteln verschwenkbar angetrieben werden können, wobei die Schwenkachsen in einem definierten Abstand zueinander angeordnet sind. Da die Verschwenkwinkel der Laserstrahlen zu einem Bezugspunkt erfasst werden können, ist der Schnittpunkt der Laserstrahlen bzw. ihre Position im Raum exakt ermittelbar. Insbesondere unter Berücksichtigung weiterer bekannter Geometriedaten, wie beispielsweise des Abstandes der Schwenkachsen zueinander. Zum Erfassen der Laserstrahlen (d.h. Lasersignalen) ist das mit Antriebsmitteln versehene Roboterfahrzeug mit Sensormitteln ausgestattet.

Kern der Erfindung ist es, dass die Antriebsansteuermittel die Antriebsmittel des Roboterfahrzeugs in Abhängigkeit der Verschwenkbewegung zumindest eines der Laserstrahlen ansteuern, wobei das Verschwenken der Laserstrahlen um ihre jeweilige Schwenkachse mittels der, insbesondere jeweils mindestens einen Elektromotor aufweisenden Schwenkmittel durchgeführt wird, wobei die Schwenkmittel entsprechend von Schwenkansteuermitteln angesteuert werden. Bevorzugt erfolgt das Ansteuern der Schwenkmittel mittels der Schwenkansteuermittel derart, dass die Laserstrahlen so um ihre jeweilige Schwenkachse verschwenkt werden, dass die Antriebsansteuermittel des Roboterfahrzeugs die Antriebsmittel so ansteuern (d.h. antreiben und lenken), dass das Roboterfahrzeug seinen Arbeitsbereich nicht verlässt und/oder den Arbeitsbereich nach einem vorgegebenen, oder vorgebbaren Muster, d.h. einer Strategie abfährt.

Im Hinblick darauf, wie die Abhängigkeit der Ansteuerung der Antriebsmittel durch die Antriebsansteuermittel von der Verschwenkbewegung eines Laserstrahls ausgestaltet ist, gibt es unterschiedliche Realisierungsmöglichkeiten. Gemäß einer ersten, bevorzugten Realisierungsmöglichkeit sind die Sensormittel signalleitend mit den Antriebsansteuermitteln für die Antriebsmittel des Roboterfahrzeugs verbunden und die Antriebsansteuermittel steuern die Antriebsmittel derart an, dass das Roboterfahrzeug einer von den Sensormitteln erfassten Verschwenkbewegung mindestens eines der Laserstrahlen folgt. Die Laserstrahlen werden also immer nur so weit verschwenkt, dass sie den Erfassungsbereich der Sensormittel nicht verlassen.

Zusätzlich oder alternativ liegt es gemäß einer zweiten bevorzugten Realisierungsmöglichkeit im Rahmen der Erfindung, eine Funkverbindung zwischen dem Roboterfahrzeug und den Schwenkansteuermitteln vorzusehen, wobei die Ansteuerung der Antriebsmittel durch die Antriebsansteuermittel in diesem Fall bevorzugt derart erfolgt, dass der sich durch das Verschwenken mindestens eines Laserstrahls ergebende neue Schnittpunkt bzw. die neue Schnittlinie zwischen den Laserstrahlen bzw. die Koordinaten des Schnittpunktes/der Schnittlinie an die Antriebsansteuermittel per Funk übermittelt werden. Diese steuern dann, insbesondere in Abhängigkeit von mittels geeigneter Sensoren zu detektierender Odometriedaten die Antriebsmittel derart an, dass sich das Roboterfahrzeug in Richtung des neuen Schnittpunktes bzw. der neuen Schnittpunktkoordinaten bewegt, wobei vorzugsweise ein Erreichen des Schnittpunktes, welches durch die Sensormittel feststellbar ist, als Statusmeldung per Funk an die Schwenkansteuermittel weitergegeben wird, und diese vorzugsweise daraufhin die Schwenkmittel derart ansteuern, dass diese die Laserstrahlen weiterverschwenken.

Es liegt also sowohl im Rahmen der Erfindung, dass die eigentliche Verschwenkbewegung von den Sensormitteln erfasst wird und die Ansteuermittel die Antriebsmittel so ansteuern, dass das Roboterfahrzeug der Schwenkbewegung folgt als auch die Möglichkeit, nach der die Sensormittel im Wesentlichen nur eine Kontrollfunktion haben, ob der angesteuerte neue Schnittpunkt/die neue Schnittlinie der Laserlinien durch eine entsprechende Ansteuerung der Antriebsmittel erreicht wurde und die eigentliche Ansteuerung der Antriebsmittel durch die Antriebsansteuermittel zum Erreichen des neuen Schnittpunktes in Abhängigkeit weiterer Informationen, wie Odometriedaten, erfolgt.

Weiterhin liegt es im Rahmen der Erfindung, dass nach dem Konzept der Erfindung ausgebildete Ansteuersystem bzw. das Ansteuerverfahren als Zusatz (Ad-On) zu weiteren Ansteuersystemen, beispielsweise wie den aus dem Stand der Technik bekannten, stromdurchflossenen Leiter einzusetzen.

Es liegt im Rahmen der Erfindung, die Mittel zum Erzeugen der Laserstrahlen und/oder die Schwenkmittel und/oder die Schwenkansteuermittel fest, beispielsweise im Garten zu installieren, oder die Mittel zum Erzeugen der Laserstrahlen und/oder die Schwenkmittel und/oder die Schwenkansteuermittel derart auszubilden, dass sie bei Bedarf, möglichst zentral platziert werden können.

Ferner liegt es im Rahmen der Erfindung, die Antriebsmittel derart auszubilden, dass sie das Roboterfahrzeug sowohl antreiben, als auch gesteuert in Abhängigkeit der Vorgaben der Antriebsanschwenkmittel lenken können. Insbesondere umfassen die Antriebsmittel mindestens ein Antriebsrad, mindestens einen Antriebsmotor, bei Bedarf ein Getriebe sowie bevorzugt auch mindestens eine Leistungselektronik. Besonders bevorzugt ist eine Ausführungsform, bei der die Antriebsmittel einen Differenzialantrieb mit einem oder mehreren, vorzugsweise vertikal drehbar gelagerten Stützrädern aufweisen. Der Differenzialantrieb besteht bevorzugt aus zwei unabhängigen Antriebseinheiten, die sich jeweils aus einem Elektromotor, einschließlich erforderlicher Sensorik und gegebenenfalls einem nachgeschalteten Getriebe zusammensetzen. Alternativ ist auch ein Endachsantrieb, also der Antrieb einer gesamten Achse bzw. Welle, ähnlich einem Kfz-Antrieb realisierbar, wobei in diesem Fall eine separate Lenkeinrichtung vorgesehen sein sollte, die an den Antriebsrädern und/oder an mindestens einem Stützrad realisiert werden kann. Daneben ist es denkbar, dass die Antriebsmittel einen Vierradantrieb, oder einen omniminusdirektionalen Antrieb, beispielsweise mit Mecanumrädern umfassen.

Die Energieversorgung zum Erzeugen der Laserstrahlen und/oder zum Betätigen der Schwenkmittel und/oder der Schwenkansteuermittel kann beispielsweise über einen Stromnetzanschluss, über Batterie und/oder mindestens einen Akkumulator erfolgen.

Um mit den Laserstrahlen einen möglichst großen Abschnitt des Arbeitsbereichs erfassen zu können, ist es von Vorteil, die Mittel zum Erzeugen der Laserstrahlen möglichst zentral anzuordnen. Es liegt im Rahmen der Erfindung mehr als zwei Laserstrahlen vorzusehen, wobei die exakte Relativposition vorzugsweise auch die absolute Position der Schwenkachsen der Laserstrahlen bekannt sein sollte. Das Vorsehen mindestens eines weiteren Laserstrahls bzw. von Mitteln zum Erzeugen mindestens eines um eine weitere Schwenkachse verschwenkbaren weiteren Laserstrahls ist insbesondere dann von Vorteil, wenn der Arbeitsbereich derart konturiert ist, das nicht der gesamte Arbeitsbereich mit Hilfe von nur zwei Laserstrahlen abgedeckt werden kann. Ferner ist das Vorsehen eines weiteren Laserstrahls von Vorteil, wenn Aussagen über die Ausrichtung des Roboterfahrzeugs getroffen werden sollen, wobei auch Aussagen über die Ausrichtung des Roboterfahrzeugs mit Hilfe von nur zwei Laserstrahlen getroffen werden können, insbesondere dann, wenn die Sensormittel, was später noch erläutert werden wird, in geeigneter Weise ausgebildet werden. Werden mehrere Laserstrahlen vorgegeben, so sind bevorzugt jedem weiteren Laserstrahl Schwenkmittel zugeordnet, die signalleitend mit den Schwenkansteuermitteln verbunden sind.

Gemäß einer bevorzugten Ausführungsform ist es vorgesehen, dass die Antriebsansteuermittel für die Antriebsmittel derart mit den Sensormitteln zusammenarbeiten, dass ein Verschwenken mindestens eines Laserstrahls um seine Schwenkachse erkannt wird und dass die Antriebsansteuermittel die Antriebsmittel in Abhängigkeit des Erkennens der Verschwenkbewegung ansteuern.

Zusätzlich zu den Sensormitteln zum Erkennen der mindestens zwei Laserstrahlen kann das Roboterfahrzeug mit einer weiteren Sensorik, insbesondere einer Nahfeldsensorik ausgestattet sein, wie beispielsweise IR-Sensoren zum Unterscheiden des Arbeitsbereichs von einem angrenzenden nicht Nicht-Arbeitsbereich oder zum Erkennen bewegter oder statischer Hindernisse.

In Weiterbildung der Erfindung ist mit Vorteil vorgesehen, dass die Antriebsansteuermittel die Antriebsmittel derart ansteuern, dass das Roboterfahrzeug derart relativ zu den Laserstrahlen verfahren wird, dass eine erste gewünschte, bezogen auf die Sensormittel absolute, insbesonders ursprüngliche Auftreffposition des Laserstrahls auf den Sensormitteln und/oder eine gewünschte, vorzugsweise ursprüngliche, bezogen auf die Sensormittel absolute zweite Auftreffposition des zweiten Laserstrahls auf den Sensormitteln wieder erreicht wird. Dabei liegt es im Rahmen der Erfindung, dass es sich bei den Auftreffpositionen der Laserstrahlen, die wieder eingestellt werden sollen, um einen Schnittpunkt oder eine Schnittlinie der Laserstrahlen handelt, wobei der Schnittpunkt bzw. die Schnittlinie anhand der Verschwenkwinkel und beispielsweise des Abstandes der Schwenkachsen zueinander als feste Koordinate bestimmbar ist. Ferner ist es denkbar, dass bezogen auf die Sensormittel nicht absolute Auftreffpositionen der Laserstrahlen auf den Sensormittel wieder hergestellt werden, sondern lediglich eine feste Relativauftreffposition der Laserstrahlen auf den Sensormitteln zueinander.

Von besonderem Vorteil ist eine Ausführungsform, bei der mindestens zwei Laserstrahlen als jeweils eine Ebene aufspannende Linie und nicht als punktförmige Laserstrahlen ausgebildet werden, wobei es bevorzugt ist, dass die linienförmigen Laserstrahlen jeweils eine Vertikalebene aufspannen, sich die linienförmigen Laserstrahlen also bei geeigneter Auslenkung in einer vertikalen Schnittlinie schneiden. Dabei kann, wie erwähnt, die Ansteuerung der Antriebsmittel von den Antriebssteuermitteln derart erfolgen, dass das Roboterfahrzeug dem Schnittpunkt folgt, beispielsweise derart, dass das Roboterfahrzeug bzw. die Antriebsansteuermittel bestrebt sind, dass die Schnittlinie der Laserstrahlen immer an einer definierten Auftreffposition auf den Sensormitteln auftrifft. Linienförmige Laserstrahlen habenden Vorteil, dass ein Verschwenken der Laserstrahlen nicht in Hochrichtung erfolgen muss, falls Unebenheiten im Arbeitsbereich vorhanden sind.

Gemäß einer bevorzugten Ausführungsform, sind die Sensormittel derart ausgebildet, dass mehrere in Umfangsrichtung nebeneinander angeordnete Fotosensoren vorgesehen sind. Bevorzugt sind Fotosensoren über den gesamten Umfang von 360 Grad angeordnet. Dabei können die Fotosensoren als Fototransistoren oder Fotodioden ausgebildet werden. Die Ansteuerung der Antriebsmittel kann beispielsweise derart erfolgen, dass sich die Laserstrahlen immer auf einem bestimmten Fotosensor oder einem beliebigen Fotosensor treffen müssen, die Antriebssteuermittel die Antriebsmittel also so ansteuern, dass das Roboterfahrzeug dem Schnittpunkt bzw. der Schnittlinie der Fotosensoren folgt. Wird beispielsweise einer der Laserstrahlen aus einem gemeinsamen Auftreffbereich auf einen beabstandeten Sensor verschwenkt, so verfährt das Roboterfahrzeug derart, dass der Schnittpunkt bzw. die Schnittlinie wieder in den ursprünglichen Fotosensor fällt. Zusätzlich oder alternativ ist eine Ansteuerung möglich, derart, dass die Laserstrahlen immer in bestimmten (absoluten oder relativen) von über den Umfang verteilten Sensoren auftreffen müssen, beispielsweise in Fotosensor 0 und 5. Wird der Laserstrahl derart verschwenkt, dass er nicht mehr in Fotosensor 5 sondern in Fotosensor 6 auftritt, aus und die Ansteuermittel derart ansteuert, dass das Roboterfahrzeug in eine Position verfährt, in der die Laserstrahlen wieder auf die Sensoren 1 und 5 auftreffen. Alternativ ist eine Ansteuerung möglich, bei der das Roboterfahrzeug bestrebt ist, eine Position anzusteuern in der immer ein bestimmter (relativer) Abstand unabhängig von der absoluten Fotosensorposition zwischen den Laserstrahlen, unabhängig von der absoluten Auftreffposition eingehalten wird. Durch schmalbandige Filter vor den Fotosensoren kann einer Robustheit gegenüber veränderlichen Lichtverhältnissen und Fremdlichteinflüssen, wie der Sonnenstrahlung realisiert werden.

Anstelle einer Vielzahl von Fotosensoren über den Umfang verteilt anzuordnen, sind Ausführungsformen denkbar, bei denen eine zentrale Erfassung der Laserstrahlen erfolgt. Hierzu ist es vorteilhaft, ein Ablenksystem, beispielsweise einen Kegelspiegel oder einen Parabolspiegel einzusetzen, mit der die Laserstrahlen auf einen zentralen Sensor, beispielsweise einem Digitalkamerachip umgeleitet und entsprechend ausgewertet werden.

Von besonderem Vorteil ist eine Ausführungsform, bei der die mindestens zwei Laserstrahlen von den Sensormitteln und/oder den Antriebsansteuermitteln unterscheidbar sind, um eine Aussage darüber treffen zu können, welcher der mindestens zwei Laserstrahlen an einem bestimmten Ort auf die Sensormittel auftrifft. Beispielsweise ist es denkbar, Laser mit unterschiedlichen Frequenzen einzusetzen oder einer der Laserstrahlen in ihrer Pulsweite zu modulieren ist. Insbesondere im Falle pulsweitenmodulierter Laser können die definierten Zeitmuster durch Empfang eines pulsweitenmodulierten Signals einfach ausgewertet werden. Beispielsweise ist eine digitale Auswertung über elektronische Zähler oder eine analoge Auswertung, beispielsweise über eine Tiefpassfilterung denkbar. Treffen beide Laserstrahlen in denselben Fotosensor, insbesondere einem Fototransistor auf, so findet eine Überlagerung statt, die sich entweder digital oder analog auswerten lässt. Die Erzeugung pulsweitenmodulierter Lasersignale kann beispielsweise durch ein zeitgesteuertes Ein- und Ausschalten der Laserstrahlquellen oder mit Hilfe von Shuttern erfolgen. Bevorzugt weisen Laserstrahlen dabei die gleiche Wellenlänge auf. Bevorzugt werden die Laserstrahlen derart pulsweitenmoduliert, dass bei einer Addition der Signale, also bei dem gemeinsamen Auftreffen in einem Fotosensor ein Signal, vorzugsweise ein Dauersignal resultiert, dass darauf rückschließen lässt, welche Laserstrahlen im Fotosensor zusammentreffen. Bei einer Anordnung mit zwei Laserstrahlen wäre es etwa von Vorteil, wenn sich die zwei unterschiedlich pulsweitenmodulierten Signale zu einem Dauersignal addierten. Bei einem System mit n Laserstrahlen wäre es von Vorteil, wenn die Pulsweiten der einzelnen Laser nach einem Binärcode ausgewählt würden, z. B. könnte Laserstrahl 1 einen duty cycle von 50%, Laserstrahl 2 einen duty cycle von 25% usw. aufweisen.

Von besonderem Vorteil ist eine Ausführungsform, bei der die Laserstrahlansteuermittel außerhalb des Roboterfahrzeugs angeordnet sind und die Antriebsansteuermittel an dem Roboterfahrzeug. Bevorzugt ist es, wenn die Laserstrahlansteuermittel und die Antriebsansteuermittel über eine drahtlose Funkverbindung miteinander kommunizieren können. Insbesondere können Statusinformationen ausgetauscht werden, beispielsweise die aktuellen Auftreffpositionen der Laserstrahlen auf den Sensormitteln und/oder Odometriedaten zur Berücksichtigung bei dem Verschwenken der Laserstrahlen durch die Laserstrahlansteuermittel. Als Kommunikations-schnittstelle kommt beispielsweise Bluetooth oder Zigbee in Betracht. Das Vorsehen einer Funkverbindung ermöglicht es, ausgehend von einer Startposition die nach dem Verschwenken mindestens eines Lasers sich einstellenden neuen Schnittpunktkoordinaten per Funk an das Roboterfahrzeug bzw. die Antriebsansteuermittel zu übersenden. Die Antriebsansteuermittel müssen die Antriebsmittel in geeigneter Weise ansteuern, dass die neuen Koordinaten angefahren werden, wobei ein Erreichen der Koordinaten wieder über Funk an die Laserstrahlansteuermittel rückgemeldet werden kann. Bei Bedarf können die Antriebsansteuermittel Odometriedaten bei der Ansteuerung der neuen Koordinaten verarbeiten.

Bevorzugt führen die Schwenkansteuermittel das Roboterfahrzeug anhand einer digitalen Karte des Arbeitsbereichs und/oder nach einer vorgegebenen oder vorgebbaren Abfahrstrategie, insbesondere Mähstrategie, beispielsweise in zueinander parallelen/oder mäanderförmigen Bahnen. Dies bedeutet, dass die Laserstrahlen so verschwenkt werden, dass die Antriebsansteuermittel die Antriebsmittel das Roboterfahrzeug derart antreiben, das es auf dem Arbeitsbereich verbleibt, etc. Es ist denkbar, die digitale Karte in die Schwenkansteuermittel, die für das Verschwenken der Laserstrahlen um ihre Schwenkachse und damit für das Führen des Roboterfahrzeuges verantwortlich sind, einzulesen oder die digitale Karte in einem Lernmodus zu erstellen und in digitaler Form abzuspeichern. Dazu können mittels des Roboterfahrzeuges die Außen- und/oder Innengrenzen des Arbeitsbereichs abgefahren bzw. abgeschnitten werden, wobei in diesem Fall die Laserstrahlen aufgrund einer entsprechenden Ansteuerung mittels der Schwenkansteuermittel und gegebenenfalls einer Funkkommunikation mit dem Roboterfahrzeug den Sensormitteln folgen und die Koordinaten der Außen-und/oder Innengrenzen aufnehmen und digital abspeichern. In der Regel sind zum Anlernen des Arbeitsbereichs, d.h. zum Erstellen der digitalen Karte lediglich die X-Y, d.h. in einer Ebene liegenden Koordinaten von Bedeutung. Dies gilt insbesondere für eine Ausführungsform, bei der die Laserstrahlen linienförmig sind.

Bevorzugt ist eine Ausführungsform, bei der nach dem Einschalten bzw. Positionieren des Roboterfahrzeuges und nach dem Einschalten bzw. Positionieren der Mittel zum Erzeugen und Verschwenken der Laserstrahlen eine automatische Positionserkennung des Roboterfahrzeugs erfolgt. Hierzu wird bevorzugt zunächst einer der Laserstrahlen solange verschwenkt, bis das Roboterfahrzeug die Detektion des Laserstrahls und/oder die exakte Auftreffposition auf den Sensormitteln an die Schwenkansteuermittel rückmeldet. Darauf hin schwenkt der zweite Laserstrahl bis auch dessen Detektion und eine entsprechende Rückmeldung erfolgt. Daraufhin ist das Ansteuersystem bereit für den Normalbetrieb. Alternativ ist es auch denkbar, beide Laserstrahlen gleichzeitig zu verschwenken und berechnete Detektionen über Funk an die Schwenkansteuermittel zurückzusenden.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen;

Diese zeigen in:
- Fig. 1: eine Draufsicht auf ein nach dem Konzept der Erfindung ausgebildetes Ansteuersystem,
- Fig. 2: einen möglichen Aufbau von Sensormitteln und
- Fig. 3: eine mögliche Ausführungsform von pulsweiten- modulierten Laserstrahlen.

### Ausführungsform der Erfindung

In den Figuren sind gleiche Bauteile und Bauteile mit der gleichen Funktion mit den gleichen Bezugszeichen gekennzeichnet.

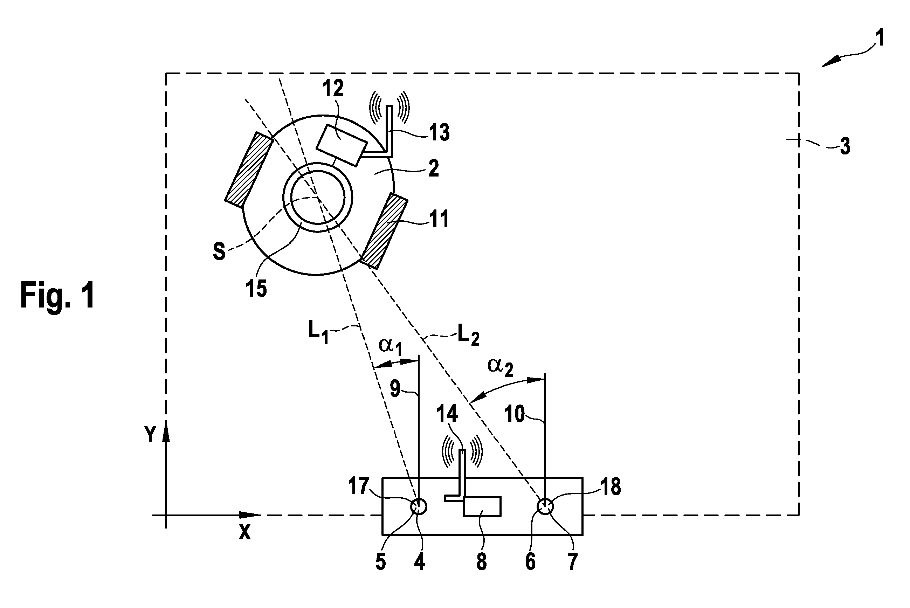

In Fig. 1 ist ein Ansteuersystem 1 für ein als autonomen Rasenmäher ausgebildetes Roboterfahrzeug mit einem Mähwerk gezeigt. Das Roboterfahrzeug 2 befindet sich auf einem strichliert umrandeten Arbeitsbereich 3.

Zum Führen des Roboterfahrzeugs 2 mit einer vorgegebenen Mähstrategie auf dem Arbeitsbereich 3 sind erste Mittel 4 zum Erzeugen eines ersten linienförmigen Laserstrahls L₁ und erstes Schwenkmittel 17 zum Verschwenken des einer Vertikalebene aufspannenden ersten Laserstrahls L₁ um eine erste vertikale Schwenkachse 5 vorgesehen. Ferner sind zweite Mittel 6 zum Erzeugen eines zweiten, linienförmigen, eine zweite Vertikalebene aufspannenden Laserstrahls L₂ vorgesehen, wobei der zweite Laserstrahl L₂ mittels zweiter Schwenkmittel 18 um eine zweite vertikale Schwenkachse 7 verschwenkbar ist. Der Abstand der vertikalen Schwenkachsen 5,7 zueinander ist bekannt.

Zum gesteuerten Verschwenken der Laserstrahlen (Lasersignale L₁, L₂) sind Schwenkansteuermittel 8 (Logikeinheit) vorgesehen, die signalleitend mit den Schwenkmitteln 17, 18 verbunden sind.

In dem gezeigten Ausführungsbeispiel ist der erste Laserstrahl L₁ um einen Winkel α₁ zu einer ersten Bezugsebene 9 verschwenkt und der zweite Laserstrahl L₂ ist um einen größeren Winkel α₂ zu einer zu der ersten Bezugsebene 9 parallelen, zweiten Bezugsebene 10 verschwenkt. Die Bezugsebenen 9,10 nehmen die zugehörigen vertikalen Schwenkachsen 5,7 in sich auf.

In dem gezeigten Ausführungsbeispiel schneiden sich die jeweils eine Vertikalebene aufspannenden Laserstrahlen L₁, L₂ in einer Schnittlinie S zentrisch am Roboterfahrzeug 2.

Das Roboterfahrzeug 2 umfasst Antriebsmittel 11 zum lenkenden Antreiben des Roboterfahrzeugs 2. Diese Antriebsmittel 11 sind signalleitend mit Antriebsansteuermitteln 12 verbunden, die über eine Kommunikationsschnittstelle 13 mit einer Kommunikations-Schnittstelle 14 der Laserstrahlansteuermittel 8 kommunizieren können. Die Antriebsansteuermittel 12 sind signalleitend mit Sensormitteln 15 verbunden.

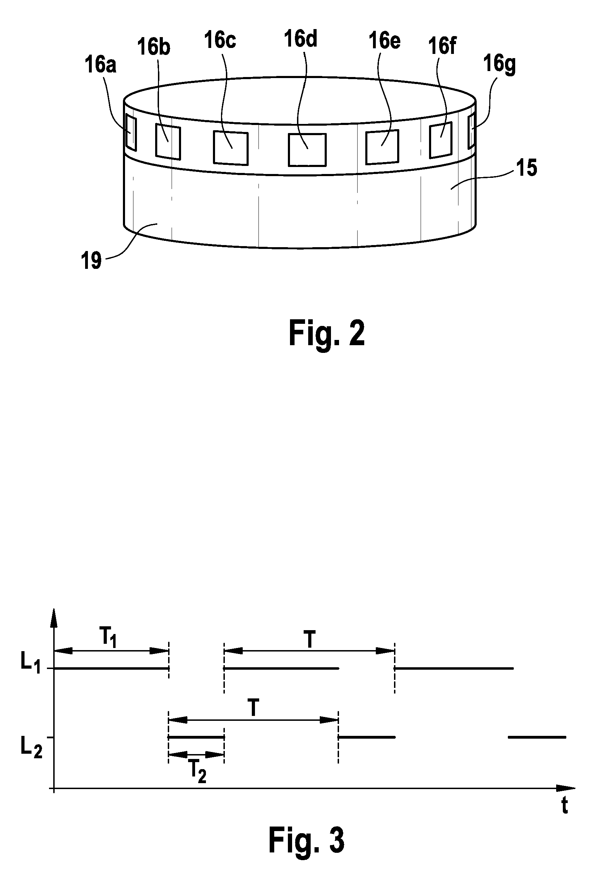

Eine mögliche Ausführungsform der Sensormittel 15 ist in Fig. 2 gezeigt. Zu erkennen sind in Umfangsrichtung nebeneinander angeordnete Fotosensoren, die sich um den gesamten Umfang eines Zylinders 19 erstrecken und von denen lediglich eine Auswahl von Sensoren 16a bis 16f gezeigt ist. Je mehr Sensoren nebeneinander angeordnet sind, desto höher ist die Detektionsauflösung. Die Sensoren 16a bis 16g dienen zum Erfassen der Laserstrahlen L₁, L₂. In einer anderen nicht gezeigten Ausführungsform sind die Fotosensoren weiter nach innen versetzt. Über eine entsprechende Linsenoptik am Umfang werden die Strahlen zum Sensor abgelenkt. Wahlweise kann dies auch gänzlich ohne Optik gelingen, wenn durch eine hinreichend gut spiegelnde Oberfläche und eine geeignete Geometrie (ähnlich Lautsprecher-Hörnern) die Laserstrahlen durch mehrfache Reflexionen zum Sensor gelenkt werden.

Die Laserstrahlen L₁, L₂, d.h. die Lasersignale sind pulsweiten moduliert (unterschiedliche Pulsdauern T₁ und T₂), wie sich beispielsweise aus Fig. 3 ergibt, so dass von den Antriebsansteuermitteln 12 anhand der Fotoströme der Fotosensoren der Sensormittel 15 erkennbar ist, welcher Laserstrahl L₁, L₂ auf welchem Fotosensor auftrifft.

Zum Führen des Roboterfahrzeugs 2 gibt es unterschiedliche Möglichkeiten. Eine erste Möglichkeit besteht darin, dass ausgehend von der in Fig. 1 gezeigten Position zumindest einer der Laserstrahlen L₁, L₂ verschwenkt wird, jedoch nur soweit, dass sich die Laserstrahlen L₁, L₂ noch im Erfassungsbereich der Sensormittel 15 befinden. Die Sensormittel 15 erfassen die sich neu einstellende Laserposition bzw. die sich neu einstellenden Auftreffpositionen und die Antriebsansteuermittel 12 steuern die Antriebsmittel 11 derart an, dass das Roboterfahrzeug 2 in eine Position verfährt, in der die absoluten gewünschten, vorzugsweise ursprünglichen Auftreffpositionen der Laserstrahlen L₁ und L₂ auf den Sensormitteln 15 (wieder) hergestellt werden. Dabei kann es sich um beabstandete Auftreffpositionen oder eine gemeinsame Auftreffposition handeln. Ebenso ist es denkbar, dass lediglich eine gewünschte Relativauftreffposition der Laserstrahlen zueinander auf den Sensormitteln 15 wieder eingestellt werden.

Nachdem die gewünschte Position erreicht wurde, an der die Auftreffpositionen den Vorgaben entsprechen, kann das Erreichen dieser Position des Roboterfahrzeugs 2 mittels der Kommunikationsschnittstelle 13 an die Laserstrahl-ansteuermittel zurückgesendet werden.

Eine weitere Ansteuermöglichkeit besteht darin, dass zumindest einer der Laserstrahlen L₁, L₂ verschwenkt wird und die sich neu ergebende vertikale Schnittlinie S von den Laserstrahlansteuermitteln 8 berechnet und über die Kommunikationsschnittstelle 14 an die Kommunikations-Schnittstelle 13 der Antriebsansteuermittel 12 gefunkt werden. Diese steuern dann die Antriebsmittel 11 derart an, dass das Roboterfahrzeug in Richtung des Schnittpunktes S verfährt. Dabei können Odometriedaten des Roboterfahrzeugs 2 genutzt werden. Bei Erreichen des Schnittpunktes S, also bei Erfassen bestimmter absoluter oder relativer Positionen der Laserstrahlen L₁, L₂ auf den Sensormitteln 15 zueinander wird das Erreichen der gewünschten Position über die Kommunikationsschnittstelle 13 an die Laserstrahlansteuermittel 8 rückgemeldet.

## Patentansprüche

1. Ansteuersystem für ein Roboterfahrzeug (2),
- mit ersten Mitteln (4) zum Erzeugen eines ersten Laserstrahls (L₁) und mindestens mit zweiten Mitteln (6) zum Erzeugen mindestens eines zweiten Laserstrahls (L₂), und
- mit ersten Schwenkmitteln (17) zum Verschwenken des ersten Laserstrahls (L₁) um eine erste Schwenkachse (5) sowie mindestens mit zweiten Schwenkmitteln (18) zum Verschwenken des zweiten Laserstrahls (L₂) um eine zweite Schwenkachse (7), und
- mit Schwenkansteuermitteln (8) zum Ansteuern der Schwenkmittel (17, 18), und
- mit Sensormitteln (15) zum Erfassen der Laserstrahlen (L₁, L₂), und
- mit Antriebsansteuermitteln (12), die geeignet sind, Antriebsmittel (11) eines Roboterfahrzeuges (2) in Abhängigkeit einer Verschwenkbewegung mindestens eines der Laserstrahlen (L₁, L₂) anzusteuern.

2. Ansteuersystem nach Anspruch 1,
**dadurch gekennzeichnet,**
**dass** die Antriebsansteuermittel (12) die Antriebsmittel (11) derart ansteuernd ausgebildet sind, dass ein Roboterfahrzeug (2) derart relativ zu den Laserstrahlen (L₁, L₂) verfahren wird, dass eine, gewünschte, vorzugsweise ursprüngliche, erste absolute Auftreffposition des ersten Laserstrahls (L₁) auf den Sensormitteln (15) und eine gewünschte, vorzugsweise ursprüngliche, zweite absolute Auftreffposition des zweiten Laserstrahls (L₂) auf den Sensormitteln (15), insbesondere wieder, resultiert und/oder dass eine gewünschte Relativauftreffposition der Laserstrahlen (L₁, L₂) zueinander auf den Sensormitteln (15), insbesondere wieder, resultiert.

3. Ansteuersystem hat einen der Ansprüche 1 oder 2 **dadurch gekennzeichnet, dass** die Sensormittel (15) signalleitend mit den Antriebsansteuermitteln (12) verbunden sind und dass die Antriebsansteuermittel (12) die Antriebsmittel (11) derart ansteuernd ausgebildet sind, dass ein Roboterfahrzeug (2) der von den Sensormitteln (15) erfassten Schwenkbewegung mindestens eines der Laserstrahlen (L₁, L₂) folgt.

4. Ansteuersystem nach einem der vorhergehenden Ansprüche,
**dadurch gekennzeichnet,**
**dass** die ersten Mittel (4) zum Erzeugen eines ersten, linienförmigen, eine erste Ebene aufspannenden Laserstrahls (L₁) ausgebildet sind, und dass die zweiten Mittel (6) zum Erzeugen eines zweiten, linienförmigen, eine zweite Ebene aufspannenden Laserstrahls (L₂) ausgebildet sind.

5. Ansteuersystem nach Anspruch 4,
**dadurch gekennzeichnet,**
**dass** die ersten Mittel (4) zum Erzeugen des linienförmigen ersten Laserstrahls (L₁) derart ausgebildet sind, dass die erste Ebene eine erste Vertikalebene ist, und dass die zweiten Mittel (6) zum Erzeugen des zweiten linienförmigen Laserstrahls (L₂) derart ausgebildet sind, dass die zweite Ebene eine zweite Vertikalebene ist.

6. Ansteuersystem nach einem der vorhergehenden Ansprüche,
**dadurch gekennzeichnet,**
**dass** die erste und die zweite Schwenkachse (5, 18) sich in vertikaler Richtung erstrecken.

7. Ansteuersystem nach einem der vorhergehenden Ansprüche,
**dadurch gekennzeichnet,**
**dass** die Sensormittel (15) mehrere in Umfangsrichtung nebeneinander angeordnete Fotosensoren (16a - 16g) umfassen.

8. Ansteuersystem nach einem der vorhergehenden Ansprüche,
**dadurch gekennzeichnet,**
**dass** der erste Laserstrahl (L₁) von dem zweiten Laserstrahl (L₂) mittels der Sensormittel (15) und/oder den Antriebsansteuermittel (12) unterscheidbar sind.

9. Ansteuersystem nach einem der vorhergehenden Ansprüche, mit einem Roboterfahrzeug (2).

10. Ansteuersystem nach einem der vorhergehenden Ansprüche, insbesondere nach Anspruch 9,
**dadurch gekennzeichnet,**
**dass** die Schwenkansteuermittel (8) separat von einem Roboterfahrzeug (2) angeordnet sind, und dass die Antriebsansteuermittel (12) an einem Roboterfahrzeug (2) angeordnet sind, und dass Funkmittel zur drahtlosen Kommunikation zwischen den Schwenkansteuermitteln (8) und den Antriebsansteuermitteln (12) oder den Sensormitteln (15), insbesondere zum Austausch von Statusinformationen, vorgesehen sind.

11. Ansteuersystem nach Anspruch 9,
**dadurch gekennzeichnet,**
**dass** die Antriebsansteuermittel (12) die Antriebsmittel (11), insbesondere auf der Basis von Odometriedaten, derart ansteuernd ausgebildet sind, dass das Roboterfahrzeug (2) sich in Richtung eines neuen, sich aufgrund der Verschwenkung mindestens eines/einer der Laserstrahlen (L₁, L₂) ergebenden Schnittpunktes/Schnittlinie (S) der Laserstrahlen (L₁, L₂) bewegt.

12. Ansteuersystem nach Anspruch 10,
**dadurch gekennzeichnet,**
**dass** die Sensormittel (15) und/oder die Antriebsansteuermittel (12) die Auftreffposition(en) der Laserstrahlen (L₁, L₂) auf den Sensormitteln (15) über die Funkmittel an die Schwenkansteuermittel (8) übermittelnd ausgebildet sind.

13. Ansteuersystem nach einem der vorhergehenden Ansprüche,
**dadurch gekennzeichnet,**
**dass** die Schwenkansteuermittel (8) das Roboterfahrzeug (2) anhand einer digitalen Karte eines Arbeitsbereichs (3) und/oder nach einer vorgegebenen oder vorgebbaren Abfahrstrategie führend ausgebildet sind.

14. Ansteuersystem nach einem der vorhergehenden Ansprüche,
**dadurch gekennzeichnet,**
**dass** ein Roboterfahrzeug (2) als Arbeitsgerät, insbesondere als Rasenmäher mit einem Mähwerk, oder als Reinigungsfahrzeug mit Reinigungsmitteln, oder als Schneefräse, oder als Laub- und/oder Gras-sammelfahrzeug, oder als Unkrautjähtfahrzeug, oder als Vertikutierfahrzeug, oder als Überwachungsfahrzeug ausgebildet ist.

15. Ansteuerverfahren für ein Roboterfahrzeug (2),
- wobei ein um eine erste Schwenkachse (5) verschwenkbarer erster Laserstrahl (L₁) und mindestens ein um eine zweite Schwenkachse (7) verschwenkbarer zweiter Laserstrahl (L₂) erzeugt werden, und
- wobei die Laserstrahlen (L₁, L₂) um ihre jeweilige Schwenkachse (5, 7) gesteuert angetrieben verschwenkt werden, und
- wobei die Laserstrahlen (L₁, L₂) von Sensormitteln (15) eines antreibbaren Roboterfahrzeugs (2) erfasst werden, und
- wobei das Roboterfahrzeug (2) in Abhängigkeit einer Verschwenkbewegung mindestens eines der Laserstrahlen (L₁, L₂) gesteuert angetrieben wird.

16. Ansteuerverfahren nach Anspruch 14,
**dadurch gekennzeichnet,**
**dass** das Roboterfahrzeug (2) derart gesteuert angetrieben wird, dass es derart relativ zu den Laserstrahlen (L₁, L₂) verfährt, dass eine, gewünschte, vorzugsweise ursprüngliche, erste absolute Auftreffposition des ersten Laserstrahls (L₁) auf den Sensormitteln (15) und eine gewünschte, vorzugsweise ursprüngliche, absolute zweite Auftreffposition des zweiten Laserstrahls (L₂) auf den Sensormitteln (15), insbesondere wieder, resultiert, und/oder dass eine gewünschte Relativauftreffposition der Laserstrahlen (L₁, L₂) zueinander auf den Sensormitteln (15), insbesondere wieder, resultiert.

17. Ansteuerverfahren nach einem der Ansprüche 14 oder 15,
**dadurch gekennzeichnet,**
**dass** das Roboterfahrzeug (2) derart gesteuert angetrieben wird, dass das Roboterfahrzeug (2) einer von den Sensormitteln (15) erfassten Verschwenkbewegung mindestens eines Laserstrahls (L₁, L₂) folgt.

18. Ansteuerverfahren nach einem der Ansprüche 14 bis 16,
**dadurch gekennzeichnet,**
**dass** das Roboterfahrzeug (2) derart gesteuert angetrieben wird, dass es sich in Richtung eines/einer per Funkübermittelten neuen Schnittpunktes/Schnittlinie (S) der Laserstrahlen (L₁, L₂) bewegt.

19. Ansteuerverfahren nach einem der Ansprüche 14 bis 17,
**dadurch gekennzeichnet,**
**dass** die Auftreffposition(en) der Laserstrahlen (L₁, L₂) auf den Sensormitteln (15) per Funk an die Schwenkansteuermittel übermittelt werden.

20. Ansteuerverfahren nach einem der Ansprüche 11 oder 12,
**dadurch gekennzeichnet,**
**dass** zu Beginn eines Ansteuervorgangs die Laserstrahlen (L₁, L₂) so lange um ihre jeweilige Schwenkachse (5, 7) verschwenkt werden, bis sie auf den Sensormitteln (15) erfasst werden, und dass das Erfassen der Laserstrahlen (L₁, L₂) und vorzugsweise auch die jeweilige Auftreffposition auf den Sensormitteln (15) an die Schwenkansteuermittel (8), insbesondere per Funk, übermittelt werden.

21. Roboterfahrzeug, betreibbar mit einem Ansteuerungsverfahren nach zumindest einem der Ansprüche 15 bis 20.
